# EUROPÄISCHE PATENTANMELDUNG

(11) **EP 4 130 509 A1**
(43) Veröffentlichungstag der Anmeldung: **08.02.2023**
(21) Anmeldenummer: 22183348.6
(22) Anmeldetag: 06.07.2022
(51) Int. Cl.: F16F 3/04, F16F 1/12

(54) **ENDABSCHLUSS FÜR EIN FEDERPAKET**

(30) Priorität: 07.07.2021 DE 102021117572
(71) Anmelder: Alcomex Beheer BV, 1716 KG Opmeer (NL)
(72) Erfinder: DEKKER, Marco, 1969 LB Heemskerk (NL); DELIS, Robert, 1816 JB Alkmaar (NL)
(74) Vertreter: Puschmann Borchert Kaiser Klettner Patentanwälte Partnerschaft mbB

(57) **Zusammenfassung**

Die Erfindung betrifft einen Endabschluss (35) für ein aus mehreren Zugfedern (1, 2, 3) bestehendem Federpaket, bei dem die einzelnen zu verbindenden Zugfedern (1, 2, 3) jeweils einen unterschiedlichen Außendurchmesser aufweisen und als Federpaket ineinander angeordnet sind und durch Haltelemente miteinander verbunden werden, wobei die äußere Zugfeder (1) und die in dieser angeordneten mittleren Zugfeder (3) jeweils in ihren Endbereichen zwischen benachbarten Windungen eine Aufspreizung (19, 21), und die in der Zugfeder (3) angeordnete innere Zugfeder (2) eine bereichsweise Einschnürung (22) ihres Außendurchmessers in ihrem Endbereich aufweisen, in ihren Endbereichen werden die Zugfedern (1, 2, 3) jeweils durch von außerhalb des Federpaketes ansetzbare Abschlusselemente (4, 5, 36, 43) und gleichzeitig durch Verbindungselemente (6, 39) miteinander verbunden, die Abschlusselemente (4, 5, 36, 43) sind als Gleichteile ausgebildet, die eine obere Halterung (10) zum Eingreifen in die Einschnürung (22) der inneren Zugfeder (2) und eine untere Halterung (14) zum Eingriff in die Aufspreizung (21) der mittleren Zugfeder (3) aufweisen, die äußere Zugfeder (1) wird über die in die Aufspreizung (21) eingreifenden Verbindungselemente (6, 39) gehalten, sodass insgesamt ein Kraft- und Formschluss zwischen den Zugfedern (1, 2, 3), den Abschlusselementen (4, 5, 36, 43) und den Verbindungselementen (6, 39) besteht.

## Beschreibung

Die Erfindung betrifft einen Endabschluss für ein aus mehreren Zugfedern bestehendes Federpaket, in dem die zu verbindenden Zugfedern durch Halteelemente endseits miteinander verbunden werden.

Der DE 20 2018 107 342 U1 kann ein Federpaket entnommen werden, das aus mindestens zwei oder einer größeren Anzahl von einzelnen, aber gemeinsam miteinander verbundenen Zugfederelementen besteht, die über endseitige Bereiche mittels eines gemeinsamen Halteelementes untereinander verbunden sind. Das Halteelement geht dabei jeweils bereichsweise einen Form- und Kraftschluss mit den Außendurchmessern der Zugfederelemente ein, wobei dieser Verbindungsbereich zwischen dem Halteelement und den Zugfederelementen durch mindestens ein Verbindungselement oder mittels eines gemeinsamen überkronenden Endstückes erzielt wird.

Eine Zugfederanordnung, bestehend aus einem Zugfederelement oder zwei ineinander angeordneten Zugfederelementen wird in der DE 20 2018 107 343 U1 offenbart. In den Federendbereichen ist eine Abschlussvorrichtung vorgesehen, durch die eine oder beide Zugfederelemente an mindestens einer ihrer Federendbereiche ausgebildeten Streckung in der Ruhelage im Wesentlichen aneinander liegenden Federwindungen bestehend aufweisen, wobei im Anschluss an die Streckung Endwindungen der Zugfederelemente in ihrer ursprünglichen Ausbildung erhalten bleiben. Über den Bereich der Streckung der Federwindungen wird eine Verbindung zwischen den Zugfederelementen und der Abschlussvorrichtung erzielt.

Die US 5,692,737 A beschreibt eine Schraubenfedervorrichtung, die zum Abbau von Spannungen eingesetzt wird. Dafür werden mehrere konzentrisch angeordnete Schraubenfedern verwendet, die sich jeweils zwischen zwei Endstücken erstrecken. Diese Schraubenfedern sind hochflexibel mit einem geringen Verhältnis von Federsteifigkeit zu Masse und haben jeweils andere Durchmesser. Die Endstücke haben ein inneres Teil und ein äußeres Teil, wobei das innere Teil einen Schlitz aufweist. Die Enden der Schraubenfedern werden durch die Schlitze so geführt, dass sie zwischen den Innen- und Außenelementen positioniert sind. Die Enden werden durch ein Befestigungselement, wie eine Schraube, die sich zwischen dem inneren und dem äußeren Element erstreckt, an Ort und Stelle befestigt.

Aus der DE 10 2012 109 477 A1 wird eine Zugfeder mit einem spiral- oder schraubenförmig gewickelten Körper aus einem Federwerkstoff bekannt, der an seinen geraden Federenden mit auswechselbaren gesicherten Adaptern zur Verbindung mit einem Bauteil oder dergleichen ausgestattet ist.

Diese Ausführungen zum Stand der Technik sind in der Praxis im Einsatz und haben sich teilweise bewährt. Doch gibt es immer wieder Anwendungsbereiche, in denen bei begrenztem Raum doch eine höhere Zugkraft des zur Anwendung kommenden Federpaketes notwendig ist.

Um dem Erfordernis nach erhöhten Federkräften bei geringem Raum Rechnung zu tragen, ist es Aufgabe der Erfindung, hier eine wirtschaftliche Veränderung bereitzustellen. Dieses soll aber auch gleichzeitig mit einer Einsparung von Fertigungskosten einhergehen.

Die Aufgabe der Erfindung wird durch die Merkmale des Anspruches 1 gelöst. Die sich an den Hauptanspruch anschließenden Unteransprüche geben dabei eine weitere Ausgestaltung des erfindungsgemäßen Gedankens wieder.

Während beim Stand der Technik zur Erhöhung der Federkräfte eines Federpaketes diese zwar ineinander, aber doch auch nebeneinander angeordnet wurden, werden bei dem Federpaket nach der Erfindung einzelne Zugfedern verwendet, die jede einen unterschiedlichen Außendurchmesser aufweisen. Diese drei unterschiedlichen Zugfedern werden insgesamt ineinander als Federpaket ausgewiesen. Wichtig ist es, dass diese drei ineinander angeordneten Zugfedern auch einer gleichmäßigen Belastung unterzogen werden können. Dieses wird durch von außen ansetzbare Abschlusselemente und gleichzeitig durch ansetzbare Verbindungselemente erreicht.

Die Abschlusselemente sind aus Kostengründen als Stanzbiegeteil aus Blech hergestellt, ebenso die zusätzlich verwendeten Verbindungselemente. Um jedoch eine sinnvolle Verbindungsmöglichkeit der Abschlusselemente ausführen zu können, sind in ihren Endbereichen alle drei Zugfedern während des Fertigungsprozesses verändert worden. In dem Fertigungsprozess ist die äußere Zugfeder zwischen den benachbarten Endwindungen der sonst eng aneinander liegenden Windungen aufgespreizt oder gestreckt worden, sodass am Ende der Zugfeder noch die gleiche Geometrie der Zugfeder erhalten bleibt. In einer bevorzugten Ausführungsform ist es auch möglich, dass der Bereich der Aufspreizung und der Endbereich des Durchmessers der äußeren Zugfeder gegenüber dem vorhandenen Durchmesser verringert werden. Bei einer solchen Ausführungsform würde nach der Montage der Abschlusselemente der gesamte Außendurchmesser des Federpaketes etwa gleich sein.

Eine analoge Endbehandlung mit einer Spreizung von Windungen erfährt die direkt in die äußere Zugfeder eingesetzte zweite Zugfeder.

Bei der dritten, d.h., der inneren Zugfeder, wird keine Spreizung der Endbereiche durchgeführt, sondern eine Einschnürung, die über einen Teil ihrer Windungen ausgeführt wird, aber so, dass am Ende der ursprüngliche Außendurchmesser erhalten bleibt.

Um ein kraftvolles Federpaket mit endseitigen Befestigungen zu erhalten, werden die vorbeschriebenen Endbehandlungen an beiden Enden der ineinander angeordneten Zugfedern ausgeführt.

Die von außen an die äußere Zugfeder angesetzten Abschlusselemente, die sich nach der Montage gegenüberstehen und in einem oberen Abschnitt miteinander verbunden werden, sind so gestaltet, dass die Abschlusselemente die mittlere und die innere Zugfeder durch vorhandene Halterungen zwischen den gespreizten und den eingeschnürten Endwindungen verbinden.

Durch das seitliche Ansetzen der Abschlusselemente wird eine Haltefunktion an der inneren und an der mittleren Zugfeder ausgeführt. Nachdem ausschließlich in dem über dem Federpaket stehenden Abschnitt die beiden Teile der Abschlusselemente durch Schrauben oder Nieten oder einen anderen kraft- und formschlüssigen Verbund verbunden werden, ist der untere Teil des Abschlusselementes aber noch nicht mit der äußeren Zugfeder verbunden. Eine derartige Verbindung wird abschließend durch seitlich in Anschlusslaschen der Abschlusselemente enthaltene Durchbrüche über eingesetzte Verbindungselemente ausgeführt. Diese Verbindungselemente haben zwei Aufgaben, nämlich die Anschlusslaschen der aufgesetzten Abschlusselemente im unteren Bereich miteinander zu verbinden und gleichzeitig die Verbindung zu der äußeren Zugfeder auszuführen. Dieses ist möglich, weil die Verbindungselemente mit hakenförmigen Sperren ausgebildet sind, die zwischen die aufgespreizten Windungen der äußeren Zugfeder eingreifen.

Es ist somit festzuhalten, dass mittels der Abschlusselemente und zweier Verbindungselemente eine gleichzeitig kraft- und formschlüssige Verbindung zwischen drei ineinander angeordneten Zugfedern für unterschiedliche Kraftbeaufschlagungen ausführbar ist. Durch diese sehr kompakte Befestigungsart der Abschlusselemente an dem Federpaket zeigt sich, dass eine raumsparende, kraftvolle Verbindung von drei Zugfedern ohne zusätzliche weitere Befestigungselemente möglich ist.

Der äußere obere Abschnitt der Abschlusselemente kann unterschiedlich gestaltet werden, d.h., es können drehbare Rollen oder auch Haken oder andere notwendige Befestigungsausführungen angebracht werden. Damit ist in diesem Punkt auch der Teil der Befestigung raumsparend ausgeführt, weil praktisch die Endausbildungen in einer Linie mit dem gesamten Federpaket liegen.

Die Erfindung wird nachfolgend anhand von möglichen Ausführungsausbildungen näher erläutert.
- Figur 1: zeigt in einer bevorzugten Ausführungsform ein gesamtes Federpaket mit endseitigen Befestigungsausführungen;
- Figur 2: eine Ausschnittdarstellung nach Figur 1, gem. Detail A;
- Figur 2a: wie Figur 2, jedoch in einer Explosionsdarstellung;
- Figur 3: eine Darstellung des gesamten Federpaketes in einer anderen Position;
- Figur 4: einen oberen Abschnitt des Federpaketes nach Figur 3, jedoch in einer Schnittdarstellung;
- Figur 5: eine Detaildarstellung eines Endabschlusses mit einem Abschlusselement;
- Figur 6: eine weitere Ausführung eines Endabschlusses;
- Figur 7: eine Einzeldarstellung eines Abschlusselementes in einer perspektivischen Darstellung;
- Figur 8: eine Einzeldarstellung eines Verbindungselementes in einer perspektivischen Darstellung;
- Figur 9: ein weiterer bevorzugter Endabschluss mit zwei gegenüberstehenden Abschlusselementen;
- Figur 10: wie Figur 9, jedoch mit einer Verbindung der Abschlusselemente untereinander.

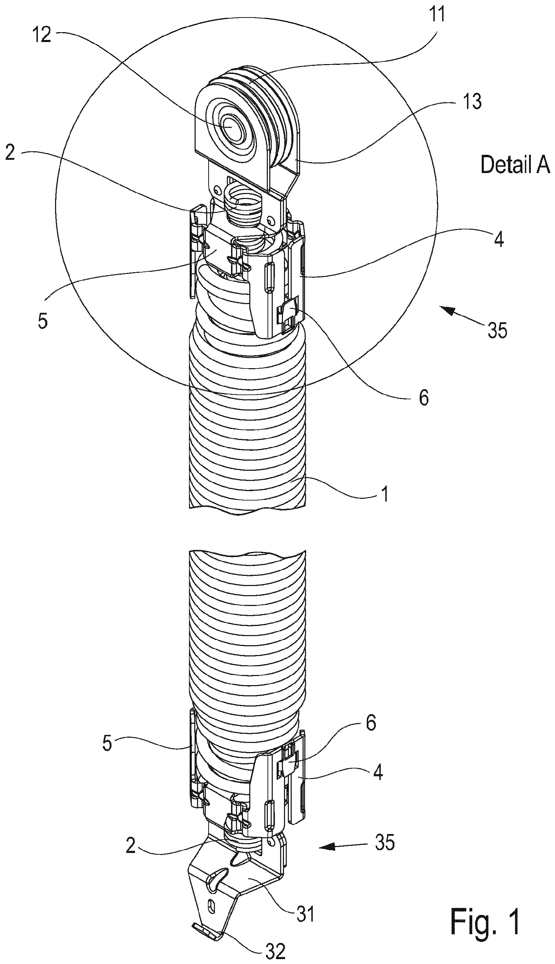

In der Figur 1 wird ein komplettes Federpaket wiedergegeben, das aus einer äußeren Zugfeder 1, einer mittleren Zugfeder 3 und einer inneren Zugfeder 2 gebildet wird. Um ein solches kompaktes Federpaket einer Verwendung zuführen zu können, sind an beiden Enden in einer bevorzugten Ausführungsform Endabschlüsse 35 angeordnet, die in der Endbefestigung des Federpaketes gleich sind, nämlich mit Abschlusselementen 4, 5, die außenseits durch Verbindungselemente 6 miteinander verbunden sind.

Am oberen Ende des Federpaketes ist außerhalb der Abschlusselemente 4, 5 ein Endabschluss 35 mit einer drehbaren Rolle 11 dargestellt. Die Rolle 11 ist auf einer Achse 12 angeordnet und in Achslagern 13, die sich in dem oberen Abschnitt befinden, gelagert, dargestellt worden.

Während am unteren Ende des Federpaketes die Abschlusselemente 4, 5 ebenfalls vorhanden sind, ist hier eine Ausbildung eines Hakens 31 mit einer endseitigen Abwinkelung 32 ausgeführt worden, andere Endausbildungen sind möglich.

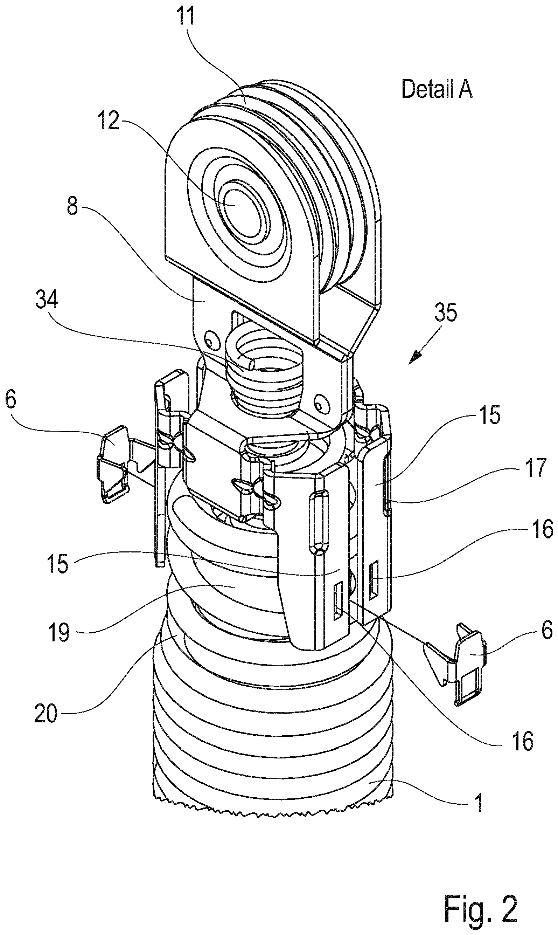

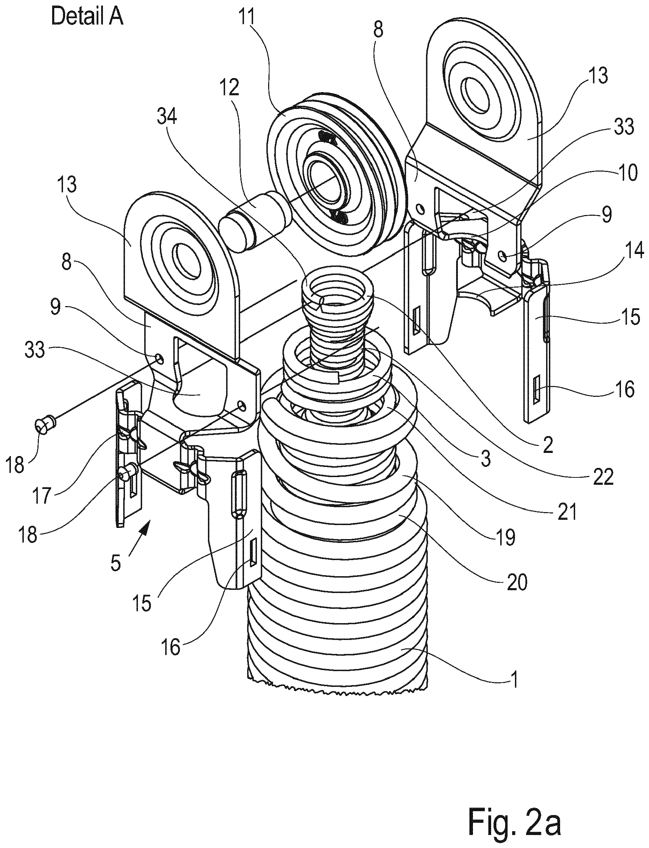

In der Figur 2 wird in einer vergrößerten Detaildarstellung A der obere Endbereich des Federpaketes wiedergegeben. Aus dieser Darstellung ist insbesondere das Zusammenwirken der Abschlusselemente 4, 5 mit in Durchbrüchen 16 einzusetzende Verbindungselemente 6 zu entnehmen. Die Verbindungselemente 6 greifen in eine Aufspreizung 19 der äußeren Zugfeder 1 in ihrem Endbereich mit ihren Sperren 25 ein.

Um den Abschluss mit den Abschlusselementen 4, 5 noch einmal zu verdeutlichen, wird in der Figur 2a das Detail A in einer Explosionsdarstellung wiedergegeben. Die Abschlusselemente 4, 5 weisen oberseits Verbindungslaschen 8 auf, über denen ein gebogener Haken 31 oder der Endabschluss 35 ausgebildet sein kann.

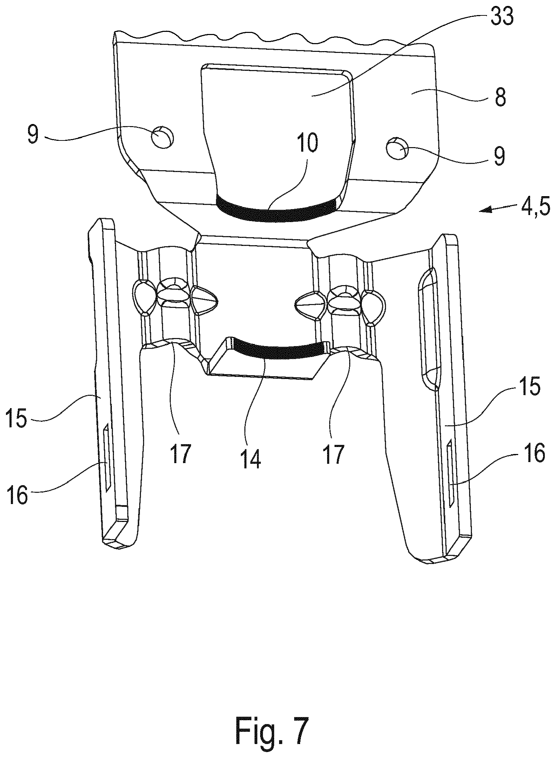

In einer Einzeldarstellung gemäß der Figur 7 wird die Ausführung eines Abschlusselementes 4, 5 in einer perspektivischen Darstellung angegeben. In den Verbindungslaschen 8 sind Bohrungen 9 enthalten, die über geeignete Verbindungsmittel beide Abschlusselemente 4, 5 nach der Montage miteinander im oberen äußeren Bereich kraft- und formschlüssig miteinander verbinden.

In der Verbindungslasche 8 ist ein Durchbruch 33 eingearbeitet, aus dessen Material abgebogen eine obere Halterung 10 entsteht, die zur endseitigen Befestigung der inneren Zugfeder 2 verwendet wird. Dafür weist die innere Zugfeder 2 eine Einschnürung 22 auf.

Unterhalb der oberen Halterung 10 ist in einer zweiten Abwinkelung ein weiterer vorstehender Teil, der als Stanzbiegeteil ausgeführten Abschlusselemente 4, 5, sichtbar. Zur Stabilisierung sind in den Abschlusselementen Sicken 17 eingearbeitet, die außenseits in Anschlusslaschen 15 übergehen. Innerhalb der Laschen 15 sind die Durchbrüche 16 für das Einsetzen der Verbindungselemente 6 eingebracht. Unterhalb der oberen Halterung 10 ist eine untere Halterung 14 ausgebildet. Diese Halterung 14 greift in eine Aufspreizung 21 der mittleren Zugfeder 3 ein, wie dieses der Figur 2a zu entnehmen ist.

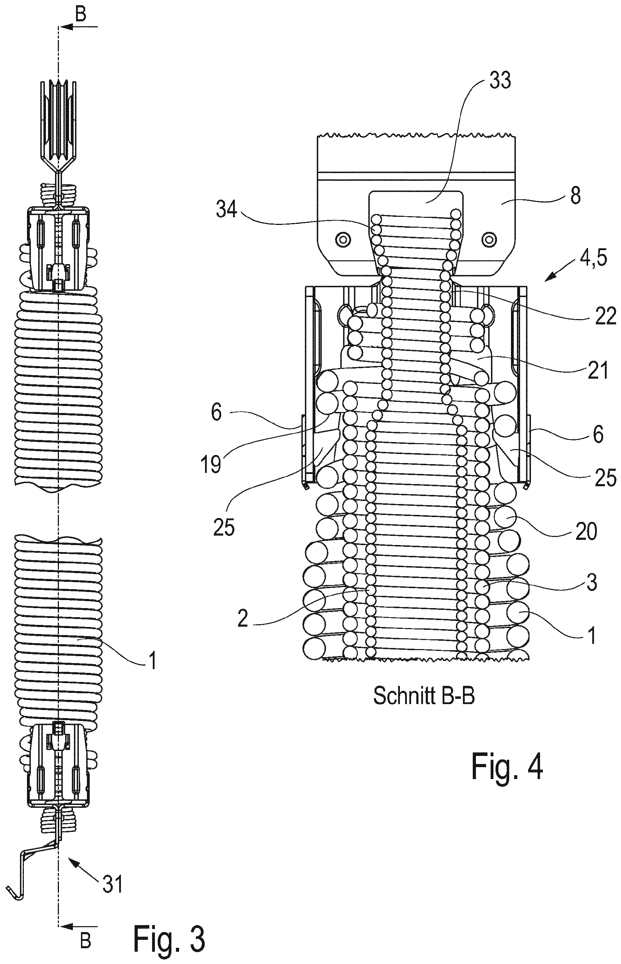

Die Figur 3 zeigt die Gesamtausbildung des Federpaketes in einer gedrehten Darstellung gegenüber der Figur 1. Durch einen Schnitt B-B wird in der Figur 4 nur einer der Anschlussbereiche des Zugfederpaketes wiedergegeben. In dieser Darstellung wird das quasi Umgreifen der Abschlusselemente 4, 5, jedoch mit nur einem der Abschlusselemente 4 oder 5, sichtbar, wobei durch die Einschnürung 22 am oberen Ende 34 der inneren Zugfeder 2 diese durch die Umgreifung der oberen beiden Halterungen 10 der Abschlusselemente 4, 5 eine Befestigungsposition eingenommen hat. Die sich um die innere Zugfeder 2 legende mittlere Zugfeder 3 ist im Endbereich der Aufspreizung 21 sichtbar. Über die unteren Halterungen 14 der beiden Abschlusselemente 4, 5 erhält die mittlere Zugfeder 3 ihre Halteposition. Die äußere Zugfeder 1 wird durch die Abschlusselemente 4, 5 und in Verbindung mit in die Durchbrüche 16 eingreifenden Verbindungselemente 6 gehalten. Durch das Eingreifen der Sperren 25 des Verbindungselementes 6 in die Aufspreizung 19 des Endbereiches der äußeren Zugfeder 1 wird eine Halterung der äußeren Zugfeder 1 erzielt und gleichzeitig wird das Zusammenhalten der Abschlusselemente 4, 5 im unteren Bereich untereinander erreicht. Wie die Figur 4 deutlich macht, ist es möglich, dass sich zur Verringerung des äußeren Bauraumes des Federpaketes die Abschlusselemente 4, 5 um eine Verringerung eines Außendurchmessers 20 legen, dadurch werden vorstehende Abschlussteile vermieden, was eine bessere Montage des Federpaketes auch in engen Baulücken oder dergleichen ermöglicht.

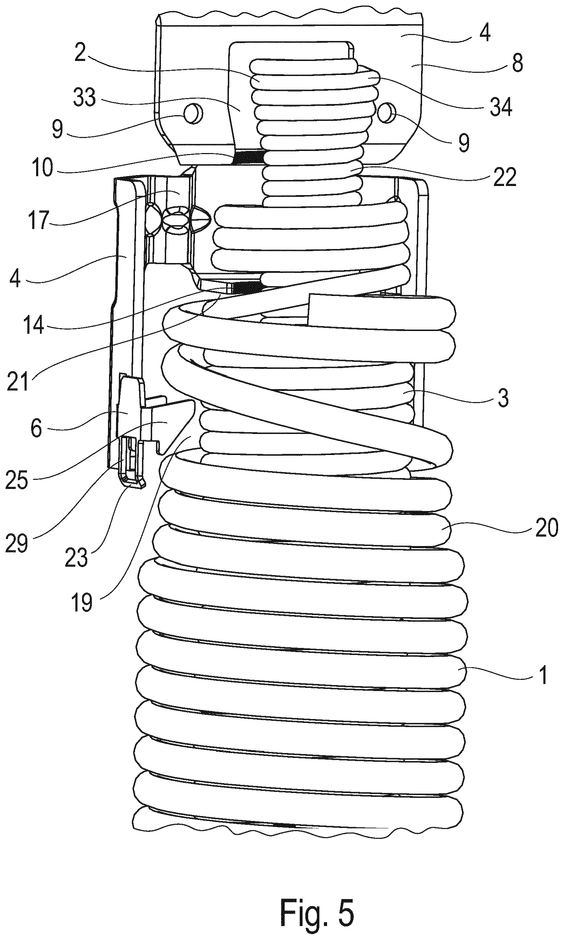

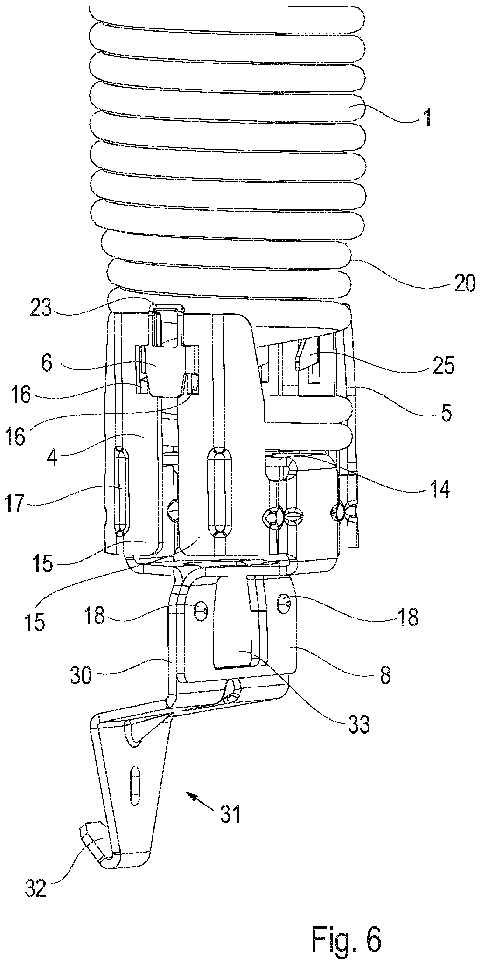

Dieses Zusammenwirken der Befestigungselemente insgesamt an den Endbereichen des Federpaketes kann aus den Einzeldarstellungen in vergrößerter Form der Figuren 5 und 6 entnommen werden.

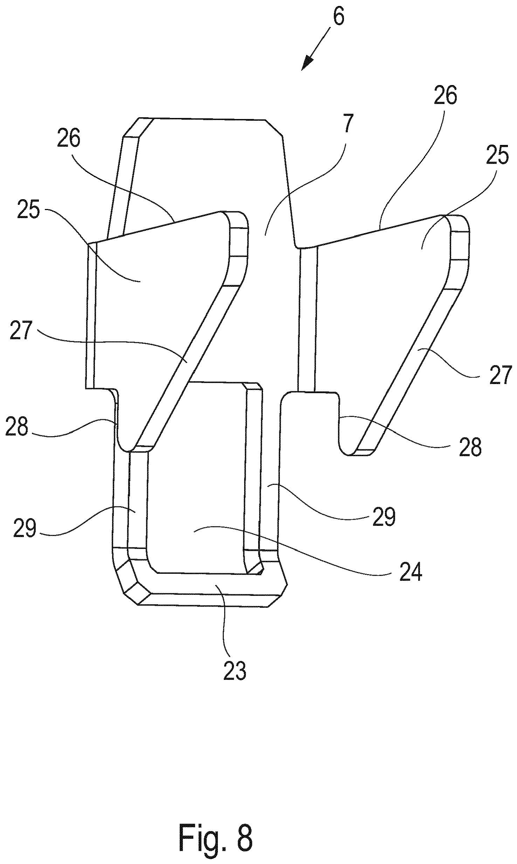

Das Verbindungselement 6 wird in der Figur 8 in einer Einzeldarstellung wiedergegeben. Dabei weist das Verbindungselement 6 einen Rücken 7 auf, der verbindend zwischen den beiden auskragenden und abgewinkelten Sperren 25 im oberen Teil ausgebildet ist. Der Rücken 7 weist unterseits einen Durchbruch 24 auf, der außenseits durch Schenkel 29 und eine einwärts abgebogene Abwinkelung 23 verbunden ist. Die beiden distanziert zueinander ausgebildeten Sperren 25 weisen oberseits einen im Wesentlichen geraden oder leicht nach außen hin ansteigenden Abschnitt 26 auf, der endseits in eine in Richtung des Rückens 7 abfallende Schrägungen 27 übergeht. Endseits der Schrägung 27 ist ein Haken 28 ausgebildet. Bei der Montage des Verbindungselementes 6 dringt die Sperre 25 zwischen die Spreizung 19 des Außendurchmessers der äußeren Zugfeder 1 über die Abschnitte 26 ein und verhakt sich mittels der Haken 28 mit einer unteren Windung der äußeren Zugfeder 1. Gleichzeitig legt sich die Abwinkelung 23 gegen die benachbarte Federwindung an. Durch das Einsetzen der Sperren 25 in die Durchbrüche 16 der Abschlusselemente 4, 5 wird neben einer Verbindung der Abschlusselemente 4, 5 untereinander gleichzeitig eine Verbindung zu der äußeren Zugfeder 1 hergestellt.

Wie die vorhergehende Beschreibung darlegt, ist eine derartige Montage der Abschlusselemente 4, 5 mit den Verbindungselementen 6 einfach auszuführen, ebenso die Verbindung der Verbindungslaschen 8 gegeneinander über die Bohrungen 9 mit den Befestigungselementen 18. Die Länge des Federpaketes kann somit den Anforderungen ohne Probleme angepasst werden. Der endseitige Bereich des Federpaketes kann mittels drehbarer Rollen 11 oder Haken 31 oder gleichwirkenden Bauteilen ohne Probleme ausgeführt werden.

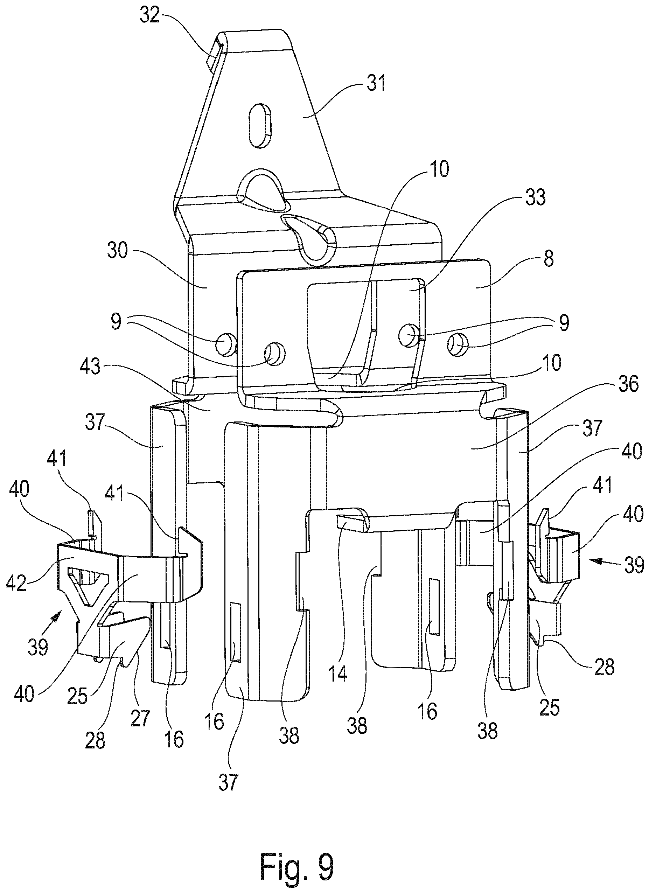

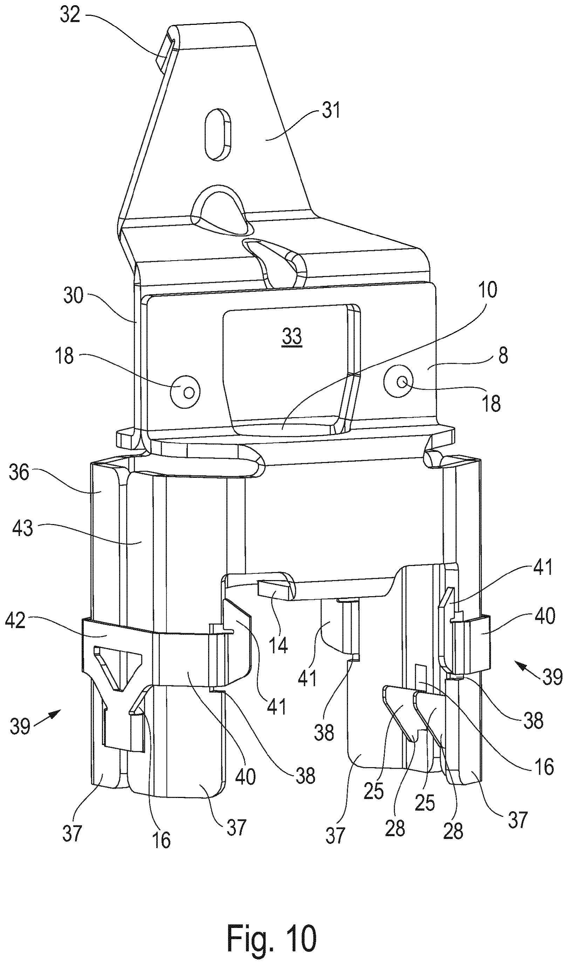

Eine weitere bevorzugte Ausführungsform der Platzierung von endseitigen Abschlusselementen 36, 43 geben die Figuren 9 und 10 wieder. Die Abschlusselemente 36, 43 entsprechen im Wesentlichen im Aufbau den Abschlusselementen 4, 5. Modifikation wurden in den ersten Abwinkelungen aus der geraden Basis heraus durchgeführt, dadurch, dass die Seitenlinien einen Absatz 38 aufweisen. Dieser Absatz 38 dient zusätzlich zur Festigung der Positionierung durch die Haken 28, denn ein in dieser Ausführungsform verwendetes Verbindungselement 39 ist mit Anschlägen 41 versehen, die in die Absätze 38 eingreifen.

Das Verbindungselement 39 besteht aus einer im Wesentlichen geraden Basis 42 von der sich seitlich abgewinkelte Haltearme 40 erstrecken, die sich außen um die Enden der Abschlusselemente 36 und 43 legen. Die auskragenden Haltearme 40 weisen zur engen Anlage an die Abschlusselemente 36, 43 eine weitere Abwinkelung mit dem Anschlag 41 auf. Am unteren Ende der Basis 42 sind in gleicher Ausführung wie bei dem Verbindungselement 6 die Haken 28 ausgebildet.

Die in den Figuren 9 und 10 abgebildete bevorzugte Ausführungsform kann insbesondere bei großen Kraftbelastungen von Federpaketen verwendet werden.

### Bezugszeichen

- 1: Äußere Zugfeder
- 2: Innere Zugfeder
- 3: Mittlere Zugfeder
- 4: Abschlusselement
- 5: Abschlusselement
- 6: Verbindungselement
- 7: Rücken
- 8: Verbindungslasche
- 9: Bohrung
- 10: Obere Halterung
- 11: Rolle
- 12: Achse
- 13: Achslager
- 14: Untere Halterung
- 15: Anschlusslasche
- 16: Durchbruch
- 17: Sicke
- 18: Befestigungselement
- 19: Aufspreizung
- 20: Außendurchmesser
- 21: Aufspreizung
- 22: Einschnürung
- 23: Abwinkelung
- 24: Durchbruch
- 25: Sperre
- 26: Abschnitt
- 27: Schrägung
- 28: Haken
- 29: Schenkel
- 30: Verbindungslasche
- 31: Haken
- 32: Abwinkelung
- 33: Durchbruch
- 34: Oberes Ende
- 35: Endanschluss
- 36: Abschlusselement
- 37: Anschlusslasche
- 38: Absatz
- 39: Verbindungselement
- 40: Haltearme
- 41: Anschlag
- 42: Basis
- 43: Abschlusselement

## Patentansprüche

1. Endabschluss (35) für ein aus mehreren Zugfedern (1, 2, 3) bestehendem Federpaket, bei dem die einzelnen zu verbindenden Zugfedern (1, 2, 3) jeweils einen unterschiedlichen Außendurchmesser aufweisen und als Federpaket ineinander angeordnet sind und durch Haltelemente miteinander verbunden werden, **dadurch gekennzeichnet, dass** die äußere Zugfeder (1) und die in dieser angeordneten mittleren Zugfeder (3) jeweils in ihren Endbereichen zwischen benachbarten Windungen eine Aufspreizung (19, 21), und die in der Zugfeder (3) angeordnete innere Zugfeder (2) eine bereichsweise Einschnürung (22) ihres Außendurchmessers in ihrem Endbereich aufweisen, in ihren Endbereichen werden die Zugfedern (1, 2, 3) jeweils durch von außerhalb des Federpaketes ansetzbare Abschlusselemente (4, 5, 36, 43) und gleichzeitig durch Verbindungselemente (6, 39) miteinander verbunden, die Abschlusselemente (4, 5, 36, 43) sind als Gleichteile ausgebildet, die eine obere Halterung (10) zum Eingreifen in die Einschnürung (22) der inneren Zugfeder (2) und eine untere Halterung (14) zum Eingriff in die Aufspreizung (21) der mittleren Zugfeder (3) aufweisen, die äußere Zugfeder (1) wird über die in die Aufspreizung (21) eingreifenden Verbindungselemente (6, 39) gehalten, sodass insgesamt ein Kraft- und Formschluss zwischen den Zugfedern (1, 2, 3), den Abschlusselementen (4, 5, 36, 43) und den Verbindungselementen (6, 39) besteht.

2. Endabschluss nach Anspruch 1, **dadurch gekennzeichnet, dass** die Abschlusselemente (4, 5, 36, 43) mit Verbindungslaschen (8) versehen sind, die nach der Montage der Verbindungselemente (4, 5, 36, 43) mit den Zugfedern (1, 2, 3) aneinander liegen und untereinander durch Befestigungselemente (18) in Verbindung mit Verbindungselementen (6) in ihrer Gebrauchsposition gehalten werden, wobei die Verbindungselemente (6, 39) gleichzeitig in die Aufspreizung (19) der Zugfeder (1) eingreifen.

3. Endabschluss nach Anspruch 1, **dadurch gekennzeichnet, dass** zumindest die Zugfeder (1) über den Endbereich des Abschnittes der Aufspreizung (19) hinaus gleichzeitig eine Reduzierung des Außendurchmessers (20) aufweist.

4. Endabschluss nach den Ansprüchen 1 und 2, **dadurch gekennzeichnet, dass** im montierten Zustand die Abschlusselemente (4, 5, 36, 43) mit dem Außendurchmesser der Zugfeder (1) abschließen.

5. Endabschluss nach einem oder mehreren der vorhergehenden Ansprüche, **dadurch gekennzeichnet, dass** das Verbindungselement (6) einen etwa geraden Rücken aufweist, der sich an die zu verbindenden äußeren Abschnitte der Abschlusselemente (4, 5) nach der Montage anlegt, wobei sein Rücken (7) in Richtung auf den Außendurchmesser der Zugfeder (1) bereichsweise einen Durchbruch (24) aufweist, der unterseits eine zu dem Außendurchmesser der Zugfeder (1) gerichtete und angestellte Abwinkelung (23) aufweist, und dass das Verbindungselement (6) aus dem Rücken (7) heraus auskragende Sperren (25) aufweist, die in die Aufspreizung (19) der Zugfeder (1) eingreifen.

6. Endabschluss nach einem oder mehreren der vorhergehenden Ansprüche, **dadurch gekennzeichnet, dass** das Verbindungselement (39) eine etwa gerade verlaufende Basis (42) aufweist, die sich an die zu verbindenden äußeren Abschnitte der Abschlusselemente (36, 43) nach der Montage anlegt, wobei ausgehend von der Basis (42) beidseits auskragende Haltearme (40) ausgebildet sind, die endseits in Richtung auf den Außendurchmesser der Zugfeder (1) Anschläge (41) aufweisen, sowie unterseits zu dem Außendurchmesser der Zugfeder (1) gerichtete und aus der Basis (42) heraus auskragende Sperren (25) aufweisen, die in die Aufspreizung (19) der Zugfeder (1) eingreifen.

7. Endabschluss nach den Ansprüchen 5 und 6, **dadurch gekennzeichnet, dass** die beiden Sperren (25) oberseits etwa gerade verlaufende Abschnitte (26) aufweisen, die endseits über Radien in zum Rücken (7) abfallend gerichtete Schrägungen (27) übergehen, die endseits in Haken (28) münden.

8. Endabschluss nach einem oder mehreren der vorhergehenden Ansprüche, **dadurch gekennzeichnet, dass** die Abschlusselemente (4, 5, 36, 43) mit Durchbrüchen (19) für den Einsatz der Verbindungselemente (6) versehen sind, in die die Sperren (25) mit den Haken (28) eingreifen, wodurch gleichzeitig eine Verbindung zwischen den Abschlusselementen (4, 5) und der äußeren Zugfeder (1) erzielt wird.

9. Endabschluss nach Anspruch 6, **dadurch gekennzeichnet, dass** im montierten Zustand die Anschläge (41) der Verbindungselemente (39) in Absätze (38) der Abschlusselemente (36, 43) eingreifen.

10. Endabschluss nach einem oder mehreren der vorhergehenden Ansprüche, **dadurch gekennzeichnet, dass** die Abschlusselemente (4, 5, 36, 43) und die Verbindungselemente (6, 39) als Stanzbiegeteile ausgebildet sind.

11. Endabschluss nach einem oder mehreren der vorhergehenden Ansprüche, **dadurch gekennzeichnet, dass** die Abschlusselemente (4, 5) in Richtung des Federpaketes abgewinkelte Anschlusslaschen (15, 37) aufweisen, in denen jeweils die Durchbrüche (16) enthalten sind.

12. Endabschluss nach einem oder mehreren der vorhergehenden Ansprüche, **dadurch gekennzeichnet, dass** im Anschluss an die Verbindungslaschen (8) der Abschlusselemente (4, 5) unterschiedlich ausgebildete Befestigungsmittel ausbildbar sind.

13. Endabschluss nach Anspruch 12, **dadurch gekennzeichnet, dass** die Befestigungsmittel als Haken (31) oder drehbare Rollen (11) oder dergleichen ausführbar sind.
